**Europäisches Patentamt**

**European Patent Office**

**Office européen des brevets**

(19)

(11) Numéro de publication: **0 156 742**

**B1**

(12)

# FASCICULE DE BREVET EUROPÉEN -

(45) Date de publication du fascicule du brevet:
23.11.88

(51) Int. Cl.⁴: **G 01 N 1/28,** G 01 N 35/06

(21) Numéro de dépôt: **85420034.2**

(22) Date de dépôt: **26.02.85**

(54) **Appareil de minéralisation pour le traitement individuel, de façon automatique, d'échantillons de produits placés dans des récipients.**

(30) Priorité: **05.03.84 FR 8403571**

(43) Date de publication de la demande:
**02.10.85 Bulletin 85/40**

(45) Mention de la délivrance du brevet:
**23.11.88 Bulletin 88/47**

(84) Etats contractants désignés:
**AT BE CH DE FR GB IT LI LU NL SE**

(56) Documents cité:
**US-A-3 466 146**
**US-A-3 467 500**
**US-A-4 080 168**

**PATENTS ABSTRACTS OF JAPAN, volume 2, no. 1,
5 janvier 1978, page 9416E77**

(73) Titulaire: **SOCIETE PROLABO, Société Anonyme,
12, rue Pelée, F-75011 Paris (FR)**

(72) Inventeur: **Commarmot, Roger, 5, Impasse de la
Garde, F-69005 Lyon (FR)**
Inventeur: **Didenot, Dominique, 8, rue Ampère,
F-69330 Meyzieu (FR)**
Inventeur: **Gardais, Jean- François, Le Verdier,
F-38200 Chuzelles (FR)**

(74) Mandataire: **Ropital- Bonvarlet, Claude, Cabinet
BEAU DE LOMENIE 99, Grande rue de la
Guillotière, F-69007 Lyon (FR)**

EP 0 156 742 B1

## Description

La présente invention concerne le domaine technique de la minéralisation, encore parfois dénommée aussi digestion, de composés minéraux, organiques ou organo-métalliques.

On sait qu'il est nécessaire, avant la plupart des traitements d'analyse de composés tels que ci-dessus, de procéder à une minéralisation par voie humide, au moyen d'acides concentrés, tels que l'acide sulfurique, l'acide nitrique, l'acide perchlorique ou des mélanges de ces acides.

Pour mener à bien un tel traitement d'analyse préalable, une méthode classique consiste à disposer dans un vase, par exemple du type matras, une dose du composé à analyser, ainsi que le volume complémentaire nécessaire d'acide concentré spécifique.

Le vase est ensuite chauffé et surveillé en permanence par un opérateur qui a la charge de régler, périodiquement, les calories transmises au vase, pour éviter l'apparition de mousses et le débordement du produit. L'opérateur doit, également, agiter, périodiquement, mais de façon fréquente, le mélange soumis à échauffement, afin d'entretenir une bonne homogénéité du composé dilué et chauffé.

Une telle surveillance est longue, fastidieuse et susceptible de provoquer des accidents physiques, parfois graves pour l'opérateur, par les risques d'explosion, de projections de la composition acide et par l'émanation de fumées corrosives.

En plus des inconvénients ci-dessus, il faut noter que la méthode ainsi appliquée ne permet pas de contrôler efficacement l'éventuel départ de fractions des produits entrant dans la composition de base et entraînées par les fumées et vapeurs qui s'échappent du col du vase. Il s'ensuit que le résultat ultérieur d'analyse s'en trouve fortement perturbé, sans qu'un moyen de contrôle ne puisse apporter une possibilité d'évaluation de l'existence et de l'importance de ce facteur négatif aléatoire.

Pour tenter de parfaire un tel procédé, différentes propositions d'amélioration ont été développées et mises en oeuvre.

C'est ainsi qu'on a proposé des installations mettant en oeuvre, en tant que moyen de chauffage, au lieu d'une flamme directe, par exemple, une batterie de creusets à rayonnement infra-rouge dont la puissance de chacun peut être réglée en agissant sur une alimentation électrique individuelle. Une telle batterie de creusets est associée à un collecteur de fumées commun à l'ensemble des creusets et relié à un groupe de pompage.

Si ces modifications ont apporté une certaine amélioration, en revanche, elles ne permettent pas de régler les problèmes de la surveillance permanente, de l'agitation et de l'incertitude des résultats obtenus, étant donné que ces trois facteurs sont toujours fonction de l'attention permanente d'un ou de plusieurs opérateurs.

Par ailleurs, il doit être considéré que la conduite d'une telle installation exige un savoir-faire particulièrement délicat. En effet, le réglage de la puissance de chauffe de chaque creuset doit être évalué en fonction de l'inertie thermique d'un tel appareil et exige, par conséquent, une très bonne expérience pour apprécier le facteur d'anticipation à retenir pour l'augmentation mais aussi pour l'abaissement de la température imposée à un échantillon. -

Toujours dans le but d'améliorer un tel procédé de traitement préalable d'analyse, on a proposé d'utiliser, en tant que générateur de chaleur, un four micro-ondes muni d'une prise d'aspiration des fumées et vapeurs.

Le brevet américain 4 080 168 enseigne une telle proposition et préconise la mise en oeuvre d'un four micro-ondes dans lequel est placé un vase contenant l'échantillon à traiter.

Cette technique présente des avantages certains, car l'application de micro-ondes permet une répartition quasi uniforme de l'énergie et donc un chauffage à coeur du composé à traiter. Pour les mêmes raisons, une telle technique permet de briser les mousses qui se développent ordinairement lors de la montée en température du composé. Une surveillance permanente de l'évolution du traitement n'est donc plus nécessaire et libère ainsi un opérateur de cet aspect fastidieux et dangereux de la méthode antérieure.

En outre, un four micro-ondes est connu pour ses propriétés d'absence d'inertie thermique, ce qui permet de maîtriser plus précisément l'énergie imposée à l'échantillon.

Une telle proposition permet donc d'apporter une amélioration certaine à la méthode antérieure mais n'est, cependant, pas de nature à régler le problème général de minéralisation ou de digestion rencontré pratiquement dans l'industrie.

En effet, la conduite d'un procédé de fabrication ou de production au sens général de produits divers, tels que chimiques, pharmaceutiques, alimentaires, implique, pour la connaissance certaine de la composition et des propriétés ultérieures d'un tel produit, de contrôler périodiquement, souvent avec une grande fréquence, à la fois les composés de base et les produits intermédiaires ainsi, bien entendu, que le produit définitif, afin de pouvoir ajuster, avec un temps de réponse court, les paramètres de conduite d'un tel procédé. Une régulation fine permet d'obtenir un produit définitif répondant exactement au cahier des charges de sa fabrication en présentant des variations de composition ou de propriétés se situant dans une fourchette de tolérances admises.

Dans le cas contraire, on conçoit qu'un procédé de fabrication mal conduit fournit une grande quantité de produit devant être rebutée ou déclassée.

Dans le domaine industriel, il serait donc souhaitable de pouvoir disposer de moyens permettant de traiter, de façon automatique mais individuelle, des échantillons de produits différents se présentant de façon aléatoire, c'est-à-dire sans ordre prédéterminé et devant être soumis à un traitement spécifique en raison, soit de leur nature, soit du résultat recherché. De tels moyens permettraient en effet d'obtenir, rapidement et de façon certaine, des résultats d'analyse précis pouvant être utilisés immédiatement pour piloter, moduler ou réguler des phases intermédiaires d'un procédé de fabrication d'un produit.

On conçoit qu'un tel besoin n'est pas satisfait par la technique connue, car la méthode manuelle est longue, dangereuse, incertaine. La technique selon le brevet américain 4 080 168 n'apporte pas de solution au problème posé, car il apparait évident qu'en raison du risque de pollution croisée un tel four micro-ondes ne peut pas être utilisé pour soumettre, à un traitement de minéralisation, plusieurs échantillons, par exemple, de natures diverses ou, encore, devant être soumis à un traitement différent. Les conditions globales de fonctionnement d'un tel four s'opposent, en effet, à l'obtention du résultat qu'il faudrait atteindre pour satisfaire le besoin de l'industrie actuelle dans le domaine de la conduite de procédés de fabrication ou d'obtention de produits divers et dans la fourniture de produits définitifs ayant, dans le temps, des caractéristiques particulières ou globales stables, précises et constantes.

On pourrait penser que le problème ainsi posé se trouve résolu par l'enseignement du brevet US-3 466 146 qui concerne un appareil pour l'analyse chimique automatique de produits. En réalité, cet enseignement concerne un appareil comportant un bras manipulateur chargé de transporter un conteneur depuis un poste de remplissage en produit à analyser, successivement, vers des postes de réception d'acide, de conditionnement thermique, d'agitation, de prélèvement, de vidage, de rinçage, de séchage. Par définition, il s'agit d'un produit connu transféré dans un conteneur.

Un tel enseignement n'est pas applicable au problème posé qui est de pouvoir traiter, de façon automatique mais individuelle, des échantillons de produits différents contenus dans des récipients préconditionnés, se présentant de façon aléatoire devant l'appareil et qu'il faut pouvoir identifier, afin de commander spécifiquement le fonctionnement dudit appareil en fonction de chaque produit.

La présente invention vise, justement, à apporter une solution au problème ainsi posé et propose, à cette fin, un nouvel appareil de minéralisation ou de digestion permettant d'effectuer le traitement individuel, mais de façon automatique, d'échantillons de produits ou composés placés dans des récipients repérés et devant être soumis, individuellement, à des traitements qui diffèrent par la méthode, la durée et/ou la température qui leur est imposée.

Un objectif de l'invention est de fournir un appareil de minéralisation qui puisse être placé aux confins de plusieurs lignes de prélèvement de produits à des stades différents d'un ou de plusieurs procédés de fabrication ou d'obtention d'un ou plusieurs produits définitifs, de façon à pouvoir traiter, automatiquement, en appliquant toutefois un traitement individuel, les échantillons se présentant à lui selon la loi du hasard.

L'appareil selon la présente invention permet de répondre positivement à un tel objectif et de fournir ainsi, en amont d'une chaîne d'analyse, les prétraitements caractéristiques spécifiques à chaque échantillon, en vue de pouvoir apporter si besoin est, avec un temps de réponse court, les corrections nécessaires à ces paramètres de conduite.

Pour atteindre les buts ci-dessus, l'appareil de minéralisation conforme à l'invention est caractérisé en ce qu'il comprend:

- un four micro-ondes délimitant une cavité apte à la réception uniquement de la capacité de rétention d'un récipient susceptible d'être mis en place dans et extrait de la cavité par une ouverture en permanence ouverte présentée par la cavité et bordée par une cheminée destinée à entourer le col du récipient,
- un dispositif d'amenage selon une succession aléatoire et de présentation individuelle à un poste fixe de récipients placés dans des logements individuels,
- des moyens de prise en compte d'au moins une caractéristique de traitement spécifique à chaque échantillon de produit amené et présenté à poste fixe par un récipient,
- un moyen de transfert individuel entre le dispositif et le four et inversement d'un récipient présenté à poste fixe,
- et une unité de commande du fonctionnement automatique de l'appareil selon un cycle propre à chaque échantillon à traiter et à laquelle sont raccordés au moins les moyens de prise en compte d'au moins une caractéristique de traitement de chaque échantillon.

Diverses autres caractéristiques ressortent de la description faite ci-dessous en référence aux dessins annexés qui montrent, à titre d'exemples non limitatifs, des formes de réalisation de l'objet de l'invention.

La fig. 1 est une perspective d'un appareil conforme à l'invention.

La fig. 2 est une vue schématique éclatée des principaux éléments constitutifs de l'appareil.

La fig. 3 est une coupe longitudinale prise selon le plan III-III de la fig. 2, abstraction faite du dispositif de définition de la cavité d'application.

La fig. 4 est une coupe-élévation partielle de l'un des éléments constitutifs de l'objet de l'invention.

La fig. 5 est une vue en plan prise selon la ligne V-V de la fig. 4.

La fig. 6 est une coupe-élévation prise selon la ligne VI-VI de la fig. 5.

La fig. 7 est une coupe-élévation partielle prise, à plus grande échelle, selon la ligne VII-VII de la fig. 6.

La fig. 8 est une vue schématique illustrant un développement de l'un des éléments constitutifs de l'objet de l'invention.

La fig. 9 est une coupe-élévation prise, à plus grande échelle, selon le plan IX-IX de la fig. 2.

Les fig. 10 et 11 sont des coupes prises, respectivement, selon les lignes X-X et XI-XI de la fig. 9.

La fig. 12 est une vue en plan prise, à plus grande échelle, selon la ligne XII-XII de la fig. 2.

La fig. 13 est une coupe prise selon la ligne XIII-XIII de la fig. 12.

La fig. 14 est une coupe-élévation illustrant un autre élément constitutif de l'invention.

La fig. 15 est une vue en plan prise sensiblement selon la ligne XV-XV de la fig. 14.

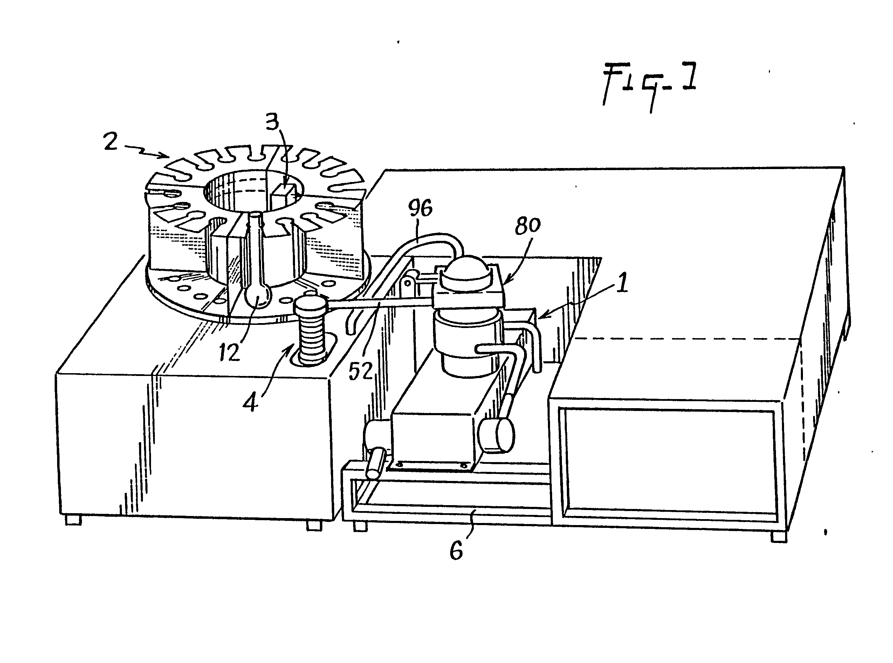

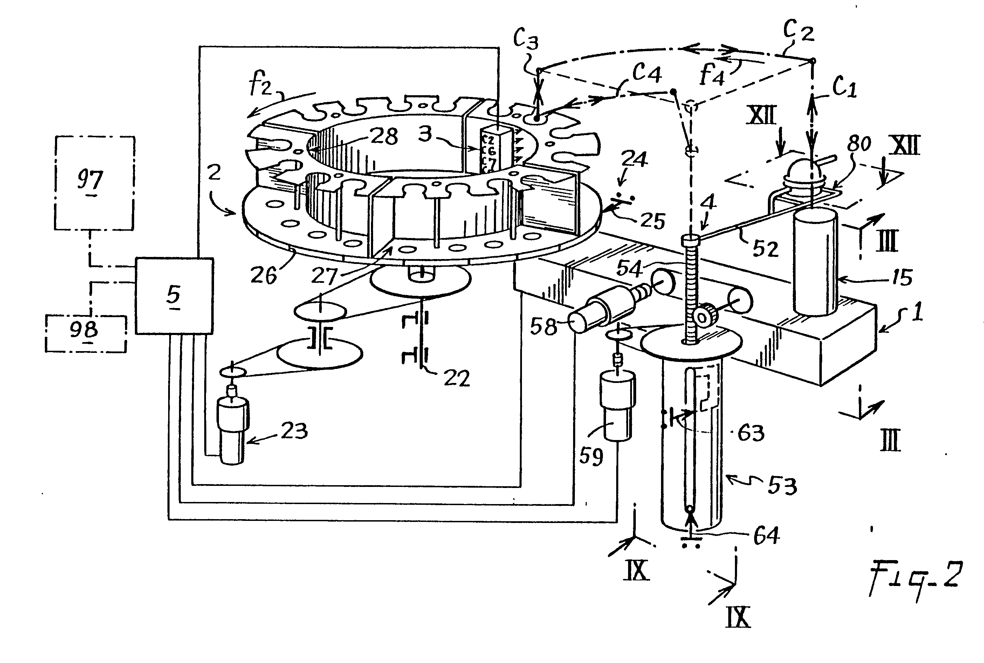

Les fig. 1 et 2 montrent que l'appareil de minéralisation conforme à l'invention est, principalement, constitué par un four micro-ondes 1, par un dispositif 2 d'amenage et de présentation à poste fixe d'échantillons à traiter, par des moyens 3 de prise en compte d'au moins une caractéristique spécifique à chaque échantillon, par un moyen 4 de transfert entre le dispositif 2 et le four 1 et par une unité de commande 5.

Les différents moyens techniques ci-dessus peuvent être construits sous la forme de modules indépendants, connectables pour ce qui concerne leurs relations interfonctionnelles ou, encore, être adaptés, montés, portés ou fixés sur un châssis commun, tel que celui désigné par la référence 6 à la fig. 1.

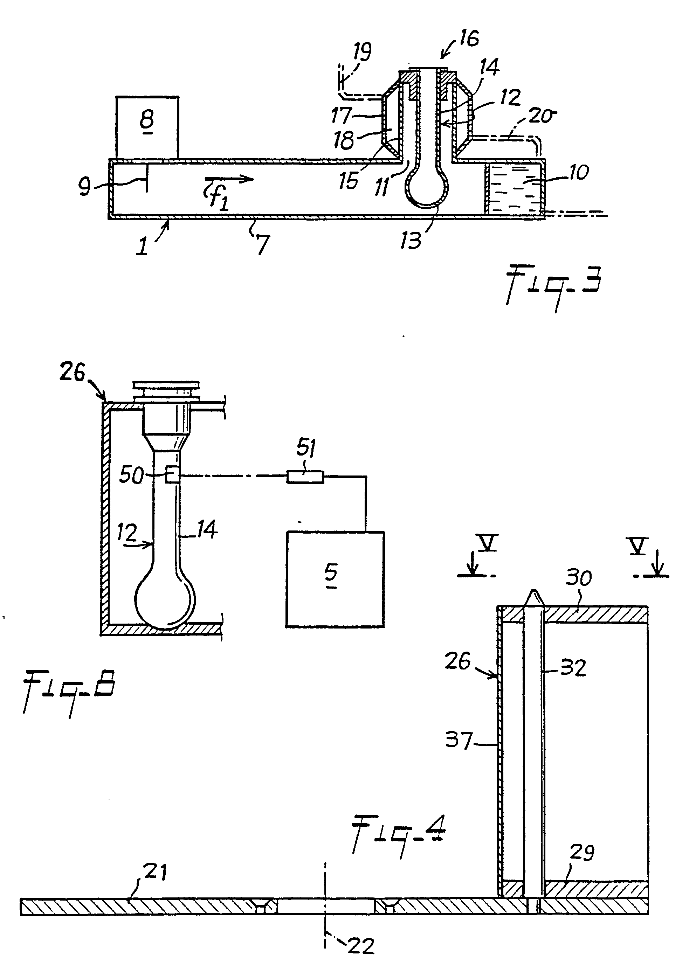

Le four micro-ondes 1, tel qu'illustré par la fig. 3, comprend une cavité d'application 7 associée à un générateur 8 dont l'antenne 9 est placée pour émettre dans la cavité 7 des micro-ondes se déplaçant suivant une direction générale $f_1$.

Dans sa partie terminale opposée à l'antenne 9, la cavité 7 comporte une chambre piège à eau 10 constituant une capacité d'absorption des micro-ondes qui ne seraient pas absorbées au cours du traitement.

Entre l'antenne 9 et la chambre piège à eau 10, la cavité présente, dans sa paroi supérieure, une ouverture 11 en permanence ouverte. La section de passage de l'ouverture 11 correspond, au jeu près, à la plus grande section horizontale transversale d'un vase 12 destiné à contenir un échantillon du composé à traiter. Le vase 12 est de forme adaptée à la nature de l'échantillon et au traitement à lui faire subir. Par exemple, le vase 12 est un récipient du type matras réalisé, notamment, en verre pour comporter une capacité de rétention 13 susceptible d'être placée à l'intérieur de la cavité 7. La capacité 13 est prolongée par un col 14 de grande longueur faisant saillie hors de la cavité 7 par l'ouverture 11. La capacité de rétention peut être de forme générale semi-sphérique ou à fond plat si le récipient est du type tubulaire ordinaire ou en forme de bulbe dans le cas d'un matras.

La cavité 7 comporte, par ailleurs, une cheminée 15 bordant l'ouverture 11 et s'élevant verticalement sur une hauteur qui est sensiblement inférieure à la longueur du col 14. La hauteur de la cheminée est aussi déterminée en fonction de la section de l'ouverture 11 et de la fréquence des micro-ondes pour constituer un organe d'absorption s'opposant à l'émission de micro-ondes à l'exterieur de la cavité 7. Le vase 12 est associé à un embout 16 entourant l'extrémité haute du col 14 pour assumer une fonction de suspension et une fonction de préhension-transport et centrage du vase 12.

La cheminée 15 est associée à une enveloppe périphérique 17 avec laquelle elle délimite une capacité annulaire 18 qui est placée en relation avec un circuit 19 de circulation d'un fluide de régulation de la température imposée au col 14 par l'échauffement du composé soumis au rayonnement micro-ondes à l'intérieur de la cavité 7. Selon une disposition préférée de l'invention, le circuit 19 présente une intercommunication 20 entre la capacité 18 et la chambre piège à eau 10.

Le dispositif 2 est conçu pour assumer une fonction d'amenage selon une succession aléatoire et de présentation individuelle à un poste fixe de matras 12 contenant chaucun un échantillon d'un produit devant être soumis à minéralisation.

Pour assumer cette fonction, le dispositif 2 peut être réalisé de plusieurs façons différentes. Par exemple, il peut être constitué par un transporteur ou convoyeur sans fin comportant des logements de réception et de support individuel de matras. Un tel convoyeur se déplace devant un poste de chargement de matras, devant un poste fixe de présentation et devant un poste de déchargement des matras dont le produit a subi le traitement de minéralisation. Par poste de chargement, il faut comprendre une unité de réception située aux confins de plusieurs voies d'amenage de matras contenant des composés en provenance de sources différentes ou de postes séparés d'une installation de mise en oeuvre d'un procédé de préparation, d'obtention ou de fabrication de produits. Une telle unité de travail a la charge, en fonction du caractère spécifique des composés à traiter, d'adjoindre la ou les doses d'acide nécessaires pour conduire une minéralisation par voie humide. Une telle unité ne fait pas partie directement de l'objet de l'invention et peut être conçue et organisée de plusieurs façons différentes pour répondre à l'objectif qui est celui de fournir au dispositif 2 des matras contenant des échantillons d'un ou de produits à traiter associés à leurs réactifs de base.

Le dispositif 2 peut aussi être réalisé, comme cela est illustré par les fig. 1, 2 et 4 à 7, sous la forme d'un carrousel ou d'un barillet tournant sur un axe vertical.

Dans un tel cas, le dispositif 2 comprend un plateau 21 porté par un arbre vertical 22 susceptible d'être entraîné en rotation, par exemple dans le sens de la flèche $f_2$, par un

groupe moto-réducteur électrique 23. L'alimentation du groupe 23 est placée sous la dépendance de l'unité de commande 5, ainsi que sous celle d'un moyen d'indexage à poste fixe 24. Selon une disposition retenue, l'indexage à poste fixe 24 comprend un détecteur de position 25, par exemple, un contacteur électro-mécanique placé pour coopérer avec des repères 26 portés par la périphérie extérieure du plateau 21.

Le carrousel délimite à sa périphérie et en correspondance des repères 26, des logements 27 de réception et de support individuel d'un matras. De tels logements peuvent résulter de multiples configurations structurelles du plateau 21, pour tenir compte de la nécessaire facilité de support, d'immobilisation, mais aussi de mise en place et d'extraction de chaque matras.

Selon une disposition constructive qui a semblé intéressante, les logements 27 sont délimités par des paniers amovibles 28 en forme de segments de couronne par exemple, chacun d'une étendue angulaire sensiblement égale à 90°.

Les fig. 4 à 6 montrent, plus en détail, la conformation de chaque panier 28 constitué sensiblement sous la forme d'un boîtier ouvert en périphérie extérieure. Un tel boîtier comporte, dans ses parois horizontales parallèles 29 et 30, des trous 31 permettant d'enfiler verticalement un tel panier sur des broches 32 s'élevant à partir du plateau 21. Ceci permet d'adapter rapidement et d'extraire, de la même façon, un quelconque des paniers 28 par rapport au dispositif 2.

Chaque panier 28 délimite un certain nombre de logements 27, par exemple au nombre de 4, chacun matérialisé par un alvéole 33 ménagé dans la paroi 29 pour constituer un siège de réception du bulbe 13 d'un matras 12. Chaque logement est aussi matérialisé par une lumière oblongue 34 ouverte depuis la périphérie extérieure et pratiquée dans la paroi supérieure 30 pour l'engagement du col 14 équipé de l'embout 16.

Par ces moyens, un matras peut être supporté et immobilisé verticalement dans un logement 27 et un opérateur chargé de la conduite de l'appareil peut assurer le garnissage du dispositif 2 en préparant des paniers 28 à partir d'une unité de chargement du type de celle évoquée ci-dessus.

Chaque logement 27 comporte un détecteur de présence 35 raccordé à l'unité de commande 5 pour contrôler, en coopération avec cette dernière et l'indexage à poste fixe 24, l'alimentation du moteur 23 qui peut être, par exemple, du type pas à pas.

Le détecteur de présence 35 est, par exemple, constitué par un palpeur physique 36 porté par l'une des parois constitutives du panier, de façon à être influencé par la présence d'un matras dans le logement 27 auquel il est affecté. Le palpeur 36 est, par exemple, du type à rappel élastique et comporte, à l'extérieur de la paroi de fond 37 du panier 28, un taquet 38 dont la fonction apparaît dans ce qui suit.

Il va de soi que d'autres types de détecteurs de présence peuvent être mis en oeuvre pour apporter, d'une manière ou d'une autre, à l'unité de commande 5, l'information logique de présence ou d'absence d'un matras 12 dans un logement 27.

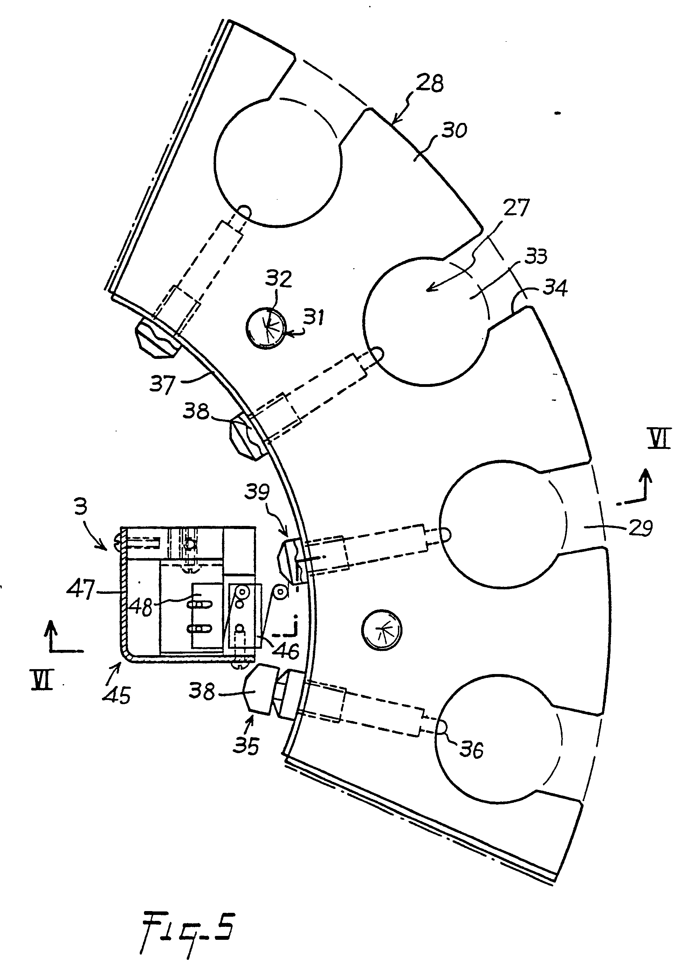

Les moyens de prise en compte 3 (fig. 5 à 7) peuvent être de conception différente, leur fonction étant toujours d'apporter à l'unité de commande 5 les informations correspondant, par exemple, au type de traitement à conduire, à la température devant être imposée à l'échantillon et à la durée de traitement à imposer à un tel échantillon.

En vue de remplir ces fonctions, les moyens 3 peuvent, par exemple, faire intervenir des taquets mobiles 39 propres à chaque logement 27 et susceptibles d'occuper chacun une position réglable déterminée le long d'un guide vertical.

A titre d'exemple, les taquets 39, au nombre de trois, peuvent être constitués chacun sous la forme d'une pièce 40 comportant, comme illustré par la fig. 7, une queue 41 engagée et guidée dans une fente 42 présentée verticalement par le dos 37 de chaque panier. Chaque pièce 40 est associée à une épingle élastique 43 permettant d'immobiliser le taquet 39 dans l'une quelconque de plusieurs positions prédéterminées par des encoches complémentaires 44 ménagées dans l'un des bords parallèles de la fente 42.

Ainsi, lors du chargement d'un panier 28, l'opérateur place les taquets 39 en fonction d'une position codée correspondant à un type de traitement, à une température et à une durée de traitement propres à chaque échantillon disposé dans le panier.

Les moyens 3 comprennent, par ailleurs, une batterie 45 de contacteurs 46 qui sont portés par un râtelier 47 s'élevant verticalement, à partir des moyens de support du dispositif 2. Les contacteurs 46 sont placés, dans le cas présent, à l'intérieur du barillet ou carroussel, de façon sensiblement parallèle à la périphérie intérieure définie par les dos successifs 37 des différents paniers 28. Les différents contacteurs 46 sont organisés en groupes correspondant aux fonctions devant être assumées, telles que celles de définition du traitement, de la température et de la durée. Les différents contacteurs 46 sont reliés électriquement à l'unité de commande 5 chargée d'assurer le fonctionnement cyclique et séquentiel de l'appareil, de façon automatique.

Le râtelier 47 est fixé de façon réglable, de manière que les différents contacteurs 46 occupent des positions correspondant à tous les états de réglage susceptibles d'être conférés aux taquets 39 par les encoches 44.

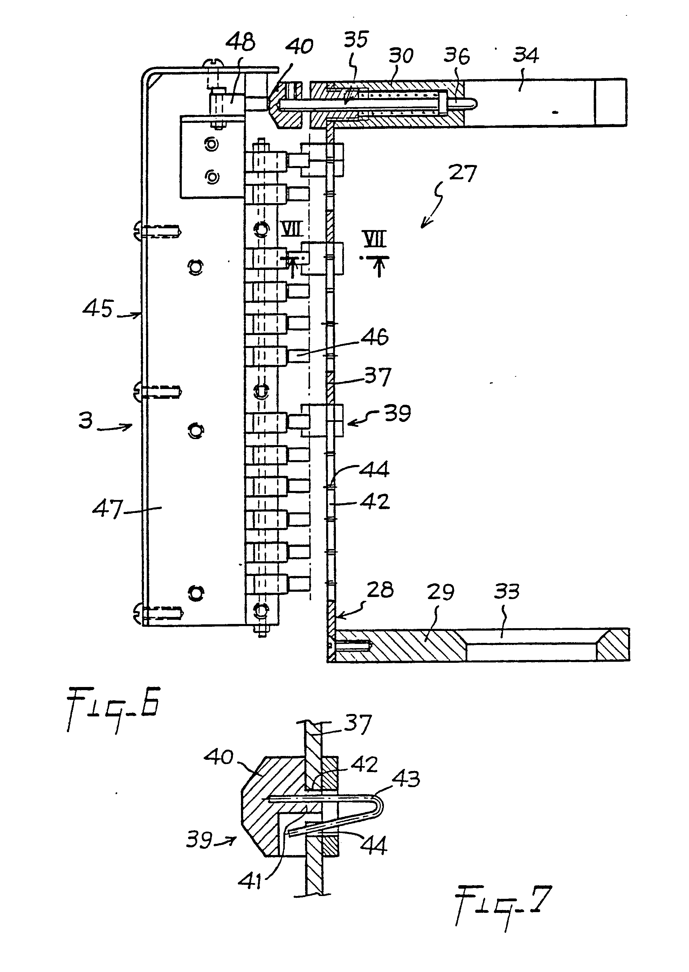

La fig. 6 montre, également, que le râtelier 47 comporte un contacteur supplémentaire 48 qui est réservé à la coopération avec le taquet 38 du détecteur 35, lorsque ce dernier est constitué sous la forme d'un détecteur de présence physique. Le contacteur 48 est, également, raccordé à l'unité de commande 5.

Les moyens 3, décrits ci-dessus, ne sont pas limitatifs et des dispositions technologiques équivalentes peuvent être retenues pour assumer la même fonction.

C'est ainsi que la fig. 8 montre une variante de réalisation consistant à faire comporter au col 14 de chaque matras 12 un cadre ou une plage 50 dont l'état de surface est apte à recevoir des informations codées effaçables pouvant être apportées par tout moyen convenable. Les moyens 3 comportent alors, dans un tel cas, un lecteur 51, par exemple de type optique, raccordé également à l'unité de commande 5.

Le poste de transfert 4 comprend un bras 52 chargé d'assurer la prise en charge et le transfert d'un matras entre le poste fixe 14 et la cheminée 15 et inversement, comme cela est schématisé à la fig. 2.

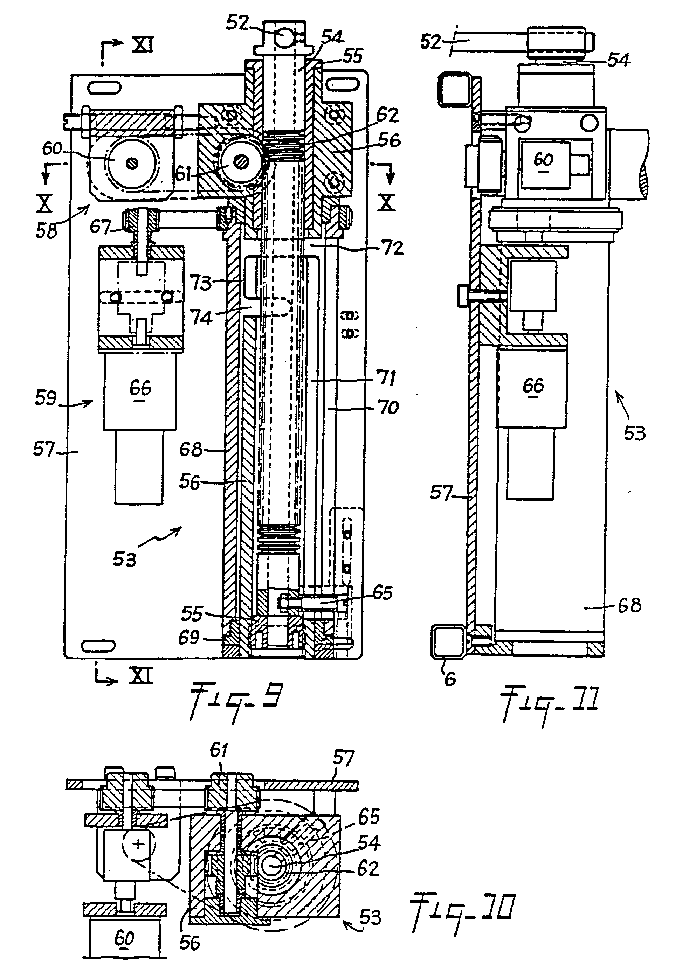

A cette fin, le moyen de transfert 4 comprend un ensemble 53 de motorisation du bras 52. L'ensemble 53, illustré plus en détail aux fig. 9 à 11, comprend un arbre 54 de direction générale verticale dont la partie terminale supérieure supporte le bras 52. L'arbre 54 est monté libre de tourner et de coulisser axialement par des paliers lisses 55 dans un fût 56 fixé sur une plaque de support 57, par exemple adaptée sur le châssis 6.

L'arbre 54 est associé à deux organes moteurs 58 et 59, respectivement chargés de lui faire décrire un déplacement axial rectiligne alternatif et un déplacement angulaire partiel alternatif.

L'organe moteur 58 est constitué par un moteur électrique 60 porté par le fût 56 et chargé d'entraîner un pignon denté 61 engrènant en permanence, avec une crémaillère cylindrique 62 présentée par l'arbre 54 sur une partie de sa longueur. Des contacteurs de fin de course 63 et 64, tels que ceux schématisés à la fig. 2, sont prévus pour déterminer les positions extrêmes de déplacement axial alternatif de l'arbre 54. L'actionnement des contacteurs 63 et 64 est assuré par un doigt 65 porté par la partie terminale inférieure de l'arbre 54.

L'organe moteur 59 comprend un moteur électriqne 66 commandant, par un pignon 67, la rotation directe ou indirecte d'un fourreau 68 monté tournant mais immobilisé axialement sur le fût 56 par des paliers lisses 69. Le fourreau 68 entoure concentriquement une partie du fût 56 et présente une fente axiale 70 à travers laquelle est engagé, en permanence, le doigt 65 de l'arbre 54. Le doigt 65 traverse aussi une fente 71 pratiquée axialement sur la partie du fût 56 entourée, par le fourreau 68. La fente 71 communique, à sa partie supérieure, avec une fente 72 ménagée périphériquement sur une valeur angulaire correspondant à la plage de pivotement devant être imposée au bras 52. La fente périphérique 72 communique avec une fente axiale 73 de plus faible longueur que la fente 71 et qui aboutit dans une fente périphérique 74 s'étendant en retour parallèlement à la fente 72 mais sur une plage angulaire inférieure à cette dernière.

Les mesures linéaires et angulaires des fentes 71 à 74 sont caractéristiques des mouvements devant être imposés au bras 52 et sont exécutées pour présenter des dimensions en relation avec ces mouvements.

Des contacteurs de fin de course angulaire selon les fentes 72 et 74 sont prévus pour coopérer avec le doigt 65.

L'alimentation des moteurs électriques 60 et 66 est placée sous la dépendance de l'unité de commande 5, ainsi que sous celle des détecteurs de position extrême de course rectiligne ou angulaire du bras 52, détecteurs raccordés à l'unité de commande 5.

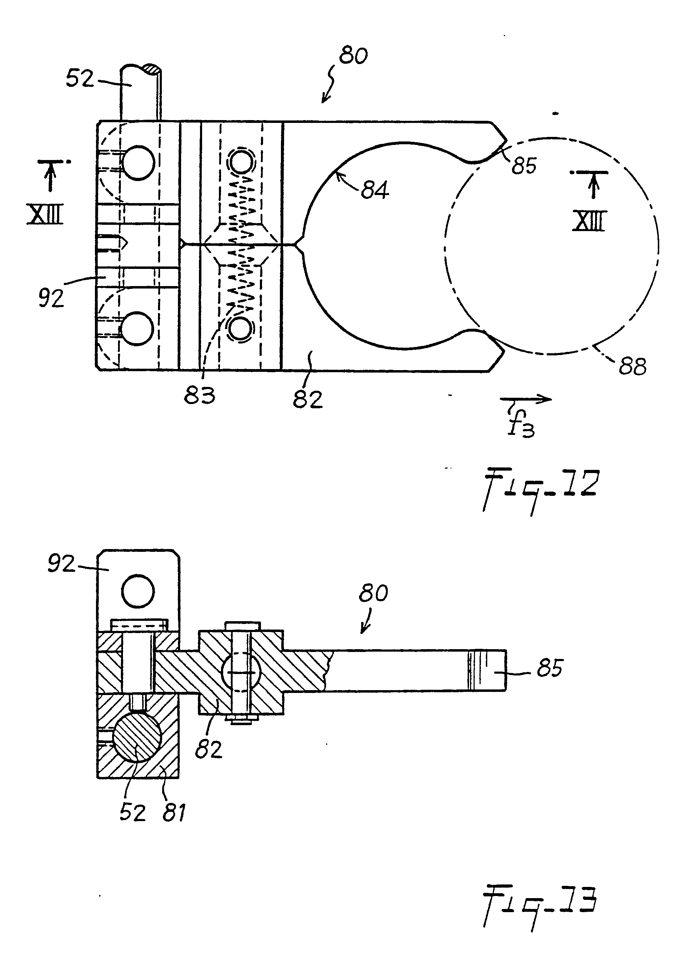

En vue d'assumer la fonction de transfert, le bras 52 est associé, par son extrémité opposée à celle portée par l'arbre 54, à une pince de préhension 80, telle que représentée plus en détail aux fig. 12 et 13. La pince 80 comprend un corps 81 adaptable sur le bras 52 par des moyens de réglage en position axiale. Le corps 81 supporte deux mâchoires 82 articulées en vis-à-vis et qui sont sollicitées en fermeture relative permanente par un organe élastique 83, par exemple, du type hélocoïdal travaillant à la traction.

Les mâchoires 82 sont exécutées pour délimiter, par leurs bords en regard, une section de préhension 84 complémentaire à l'embout 16 décrit en référence à la fig. 3. En outre, les parties terminales libres des mâchoires 82 comportent, sur les bords internes, des rampes inclinées 85 définissant ensemble un couloir à bords convergents pour l'introduction de l'embout 16. Les rampes 85 permettent d'obtenir une ouverture automatique des mâchoires 82, contre l'action du ressort 83, dès qu'elles entrent en contact avec l'embout 16 contre lequel elles sont pressées dans le sens de la flèche $f_3$.

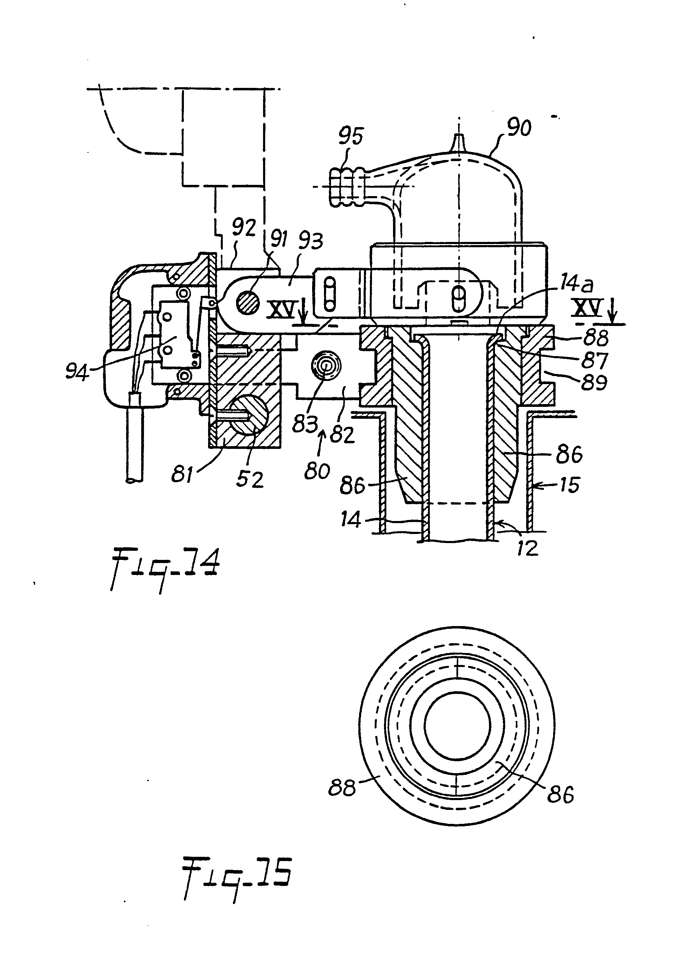

La forme des branches 82 est choisie de façon complémentaire à la constitution de l'embout 16 qui comprend, fig. 14 et 15, deux demi-coquilles 86 pouvant être adaptées par application radiale autour du col 14 d'un matras dont le rebord supérieur 14a est placé en butée contre un épaulement 87 délimité par la périphérie interne des demi-coquilles 86. Le maintien des demi-coquilles 86 est assuré par une bague 88 susceptible d'être enfilée sur les demi-coquilles 86 pour prendre appui, en butée axiale, sur ces dernières dans le sens de l'action de la gravité. La bague 88 est exécutée pour comporter une gorge périphérique 89 dont le diamètre correspond, au jeu près, à la section de préhension 84 définie par les faces en regard des branches 82 en position fermée.

La pince 80 est complétée par un couvercle 90 monté articulé, de façon basculante, par un axe horizontal 91 sur un étrier 92 s'élevant à partir du corps de pince 81. Le montage articulé du couvercle 90 est, par exemple, assuré par un levier 93 chargé de coopérer avec au moins un contacteur 94 appréciant, soit la position fermée du couvercle 90 en appui sur le bord supérieur de la bague 88, comme illustré en trait plein à la fig. 14, soit la position relevée, telle que représentée en traits mixtes. Le contacteur 94 est raccordé à l'unité de commande 5.

Le couvercle 90 comporte une tubulure 95 en relation permanente, comme cela est montré par la fig. 1, avec une canalisation souple 96 menant à un groupe de pompage et d'aspiration non représenté.

L'unité de commande 5 est, de préférence, constituée ou programmée pour établir, en prenant en compte les informations fournies par les différents contacteurs ou détecteurs, un fonctionnement entièrement automatique de l'appareil en pilotant la succession des différentes séquences d'un même cycle de traitement et en définissant les paramètres de conduite de la phase de traitement à proprement parler et cela pour chaque cycle de fonctionnement, c'est-à-dire de façon spécifique à chaque échantillon.

Il doit, toutefois, être considéré que l'unité 5 pourrait aussi être raccordée à un module 97 de visualisation des informations caractéristiques prélevées par les moyens 3. L'unité 5 pourrait, dans ce cas, être pourvue d'un tableau de commande 98 permettant d'afficher manuellement les informations caractéristiques pour déclencher alors le fonctionnement automatique des différentes séquences d'un seul cycle donné, par opposition au cas précédent où la succession de chaque cycle différent est prise en charge de façon automatique par l'unité de commande 5.

De même, le déclenchement des phases de traitement pourrait être déterminé par la position des matras, en relation avec des consignes de traitement introduites dans un programme de fonctionnement automatique.

L'appareil décrit ci-dessus fonctionne de la façon suivante.

A partir de la position, illustrée par la fig. 2, il peut être considéré que l'appareil se trouve dans un état de fin d'un cycle de traitement d'un échantillon disposé dans un matras placé dans la cavité 7 du four 1 en étant porté par la pince 80. Dans un tel état, le fonctionnement du four micro-ondes est interrompu.

L'unité 5 commande, alors, l'alimentation du moteur 60, de manière à provoquer l'élévation de l'arbre 54 sur une course verticale correspondant à la mesure nécessaire pour extraire le bulbe 13 de la cheminée 15. Cette course rectiligne verticale est désignée par la référence $C_1$ à la fig. 2.

L'examen des fig. 9 à 11 permet de constater que cette phase de fonctionnement de l'ensemble de motorisation 53 peut se dérouler sans incidence entre les différents moyens constitutifs de cet ensemble, puisque le doigt 65 est alors déplacé axialement dans les fentes 70 et 71.

Par l'intermédiaire du contacteur de fin de course, tel que 63, l'unité 5 commande ensuite l'arrêt d'alimentation du moteur 60, puis l'alimentation du moteur 66 chargé de commander par le fourreau 68 et le doigt 65 le déplacement annulaire du bras 52 dans le sens de la flèche $f_4$. Cette course angulaire du bras 52 est déterminée pour déplacer le matras 12 de l'aplomb de la cheminée 15 jusqu'à l'aplomb du logement 27 duquel il a été précédemment extrait. Cette course de déplacement angulaire est désignée par la référence $C_2$ à la fig. 2.

Lorsque le contacteur de fin de course prévu à cet effet détermine la fin de la course $C_2$ dans le sens de la flèche $f_4$, l'unité 5 interrompt l'alimentation du moteur 66 et commande celle du moteur 60, de façon à provoquer une rotation de ce dernier inverse à celle de la phase décrite précédemment.

L'arbre 54 est ainsi sollicité en déplacement rectiligne vertical descendant sur toute la longueur de la fente 73, ce qui correspond au dépôt du matras 12 dans le logement qu'il occupait avec stabilisation, par appui du bulbe 13 dans l'alvéole 33 et, simultanément, appui du bord inférieur de la bague 88 sur le dessus de la paroi 30 du panier 26 correspondant.

Cette course descendante, désignée par la référence $C_3$ à la fig. 2, est déterminée par un contacteur de fin de course permettant de commander, par l'unité 5, l'arrêt de l'alimentation du moteur 60 et l'alimentation du moteur 66 pour provoquer une rotation de ce dernier inverse de celle précédemment décrite.

Ceci permet de faire parcourir au doigt 65 la lumière 74 et correspond à une course du bras 52 désignée par la référence $C_4$ à la fig. 2. L'examen de cette figure permet de constater que la pince 80 est alors extraite de l'embout 16 et déplacée angulairement jusque dans une position d'attente, en étant dégagée du dispositif 2.

Cette position d'attente, déterminée par un contacteur de fin de course, autorise l'unité 5 à commander l'alimentation du groupe moto-réducteur 23, de manière à faire tourner l'arbre 22 dans le sens de la flèche $f_2$. Le plateau 21 est déplacé angulairement de la valeur du pas correspondant à l'amenée en coopération d'un repère 26 avec l'indexage à poste fixe 24. Le contacteur 25 fournit à l'unité 5 une information permettant d'interrompre l'alimentation du groupe autoréducteur 23, dans la mesure où le logement 27, ainsi présenté au poste fixe 24, est considéré comme occupé par un matras, par l'intermédiaire du détecteur de présence correspondant 35. Dans le cas où le détecteur de présence 35 ne fournit pas d'information à cet effet, l'alimentation du groupe auto-réducteur 23 est maintenue pour amener le logement 27 suivant en présentation au poste fixe 24.

Dans le cas présent, l'information de détection de présence est assurée par l'intermédiaire du taquet 38 amené, lors de la rotation dans le sens de la flèche $f_2$, à actionner le contacteur 48 correspondant.

La présentation d'un logement 27 au poste fixe 24 a pour effet de commander, par les différents taquets 39, les contacteurs 46 correspondants du râtelier 45 et de fournir ainsi, à l'unité 5, les éléments correspondants aux paramètres de fonctionnement devant être imposés au four micro-ondes 1.

Une telle présentation à poste fixe autorise, également, l'unité 5 à commander l'ensemble de motorisation 53 pour faire effectuer au bras 52 les courses $C_4$ à $C_1$, dans l'ordre inverse à ce qui est décrit ci-dessus. La pince 80 assure ainsi la prise en charge d'un autre matras contenant un échantillon à traiter, extrait ce matras selon la course $C_3$, déplace ce matras de l'aplomb de son logement 27 à l'aplomb de la cheminée 15 selon la course $C_2$, puis descend le matras dans la cavité 7 selon la course $C_1$.

Le contacteur de fin de course 64, déterminant la mise en place du matras dans le four, permet de déclencher, par l'unité 5, le fonctionnement de ce dernier selon les paramètres initialement mémorisés, dans la mesure où le contacteur 95 constate la position fermée du couvercle 90.

De façon synchronisée, le groupe de pompage et d'aspiration est mis en marche pendant la durée nécessaire pour assurer le prélèvement des fumées et des vapeurs se dégageant pendant la montée en température initiale et/ou principalement réactive de l'échantillon soumis à l'application des micro-ondes délivrées par le four 1 à la puissance et selon une durée correspondant exactement aux informations adressées à l'unité 5 par le moyen de prise en compte 3.

En fin de phase de traitement, l'appareil se trouve alors de nouveau dans l'état initial considéré par supposition, comme le début du cycle de fonctionnement venant d'être décrit. Un autre cycle de fonctionnement peut alors se dérouler.

Ainsi que cela ressort de ce qui précède, l'appareil conforme à l'invention permet de réaliser un traitement de minéralisation préalable à un traitement d'analyse en procédant de façon automatique pour appliquer un traitement individuel propre à chaque échantillon de produit à traiter, quels que soient l'ordre et la succession des échantillons qui peuvent ainsi être présentés, de façon totalement aléatoire.

Une telle possibilité de traitement individuel, de façon automatique, d'échantillons de natures diverses ou de même nature, devant être soumis à des traitements différents, permet de digérer, par un appareil approprié, de façon rapide et efficace, un grand nombre d'échantillons et de réduire notablement le temps d'obtention des informations éventuelles de changement ou correction des paramètres de déroulement des phases d'un procédé de traitement, de fabrication ou d'élaboration d'un produit définitif.

La mise en oeuvre d'un four de traitement comportant une cavité ouverte en permanence permet de faciliter l'introduction et l'extraction d'un matras de façon automatique, par la cheminée 15 formant par elle-même obturateur aux micro-ondes. La structure de la cheminée permet aussi de faire varier les conditions de circulation du fluide de régulation de température du col 14 du matras. Il devient ainsi possible de faciliter le maintien de ce col à une température propre à la formation d'une phase de condensation pour éviter l'extraction par les vapeurs et fumées de particules de composés du produit en cours de minéralisation. Ceci permet de disposer, après minéralisation, d'une solution permettant de procéder à une analyse particulièrement fine et précise et, surtout, reproductible des composés à isoler.

Si, en général, il s'agit de refroidir le col 14, il est parfois nécessaire d'élever cette température, par exemple, dans le cas d'une minéralisation par voie humide et à phase oxydante pour assurer l'élimination des produits de réaction. La cheminée permet aussi d'atteindre ce résultat.

Un autre avantage de l'invention réside dans le fait que l'application de micro-ondes à l'échantillon permet de supprimer les risques de moussage de l'association composés-réactifs, de sorte que le fonctionnement automatique de l'appareil peut intervenir sans aucun risque et avec une surveillance minimale.

Il faut, par ailleurs, noter que les différents moyens selon l'invention permettent de supprimer tout risque de fonctionnement aléatoire, étant donné que le fonctionnement du four micro-ondes, déclenché par l'unité 5, est placé sous la dépendance de moyens d'appréciation de l'exécution et succession correcte des différentes phases intermédiaires et de la connaissance de la position du couvercle 90 chargé de prélever, par le groupe de pompage et d'aspiration, les fumées et vapeurs.

L'invention n'est pas limitée aux exemples décrits et représentés, car diverses modifications peuvent y être apportées sans sortir de son cadre.

**Revendications**

1. Appareil de minéralisation pour le traitement individuel, de façon automatique, d'un échantillon de produit placé dans un récipient, du type comprenant un four de réception d'un récipient et un moyen de transfert individuel d'un récipient dans et hors d'un four, caractérisé en ce que:
   - le four (1) est du type micro-ondes délimitant une cavité (7) apte à la réception uniquement de la capacité de rétention (13) d'un récipient (12) susceptible d'être mis en place dans et extrait de la cavité par une ouverture (11) en permanence ouverte présentée par la cavité et bordée par une cheminée (15) destinée à entourer le col du récipient,
   - un dispositif (2) est prévu pour l'amenage selon une succession aléatoire et pour la présentation individuelle à poste fixe (24) de récipients placés dans des logements individuels,
   - des moyens (3) sont prévus pour la prise en compte d'au moins une caractéristique de traitement propre à chaque échantillon de produit amené et présenté à poste fixe par un récipient,
   - le moyen (4) de transfert individuel est disposé pour transférer un récipient entre le dispositif (2) et le four (1) et inversement d'un récipient présenté à poste fixe,

- une unité (5) de commande est prévue pour déclencher le fonctionnement automatique de l'appareil selon un cycle propre à chaque échantillon à partir des informations issues des moyens de prise en compte auxquels elle est raccordée.

2. Appareil selon la revendication 1, caractérisé en ce que le dispositif d'amenage et de présentation (2) est associé à un organe moteur d'entraînement (23), du type pas à pas ou autre, dont le fonctionnement est placé sous le contrôle de l'unité de commande (5), d'un détecteur (35) de présence de récipients amenées à poste fixe (24) et d'un détecteur (25) d'indexage du dispositif à poste fixe.

3. Appareil selon la revendication 2, caractérisé en ce que le dispositif d'amenage et de présentation (2) est constitué par un convoyeur sans fin défilant devant un poste de chargement et un poste de déchargement situés, respectivement, en amant et en aval du poste de transfert.

4. Appareil selon la revendication 2, caractérisé en ce que le dispositif d'amenage et de présentation (2) est constitué par un carrousel ou barillet tournant comportant des paniers amovibles (28) de support de récipients.

5. Appareil selon la revendication 1, caractérisé en ce que les moyens (3) de prise en compte d'au moins une caractéristique de traitement de chaque échantillon comprennent:

- une surface de marquage (50) présentée par le col de chaque récipient,
- des informations codées effaçables rapportées sur la surface,
- un moyen de lecture (51) des informations codées.

6. Appareil selon la revendication 1, caractérisé en ce que les moyens (3) de prise en compte d'au moins une caractéristique de traitement de chaque échantillon comprennent:

- des taquets mobiles (39) réglables en position et portés par la structure du dispositif d'amenage et de présentation de façon propre à chaque logement (27) de support d'un récipient,
- des contacteurs (46) raccordés à l'unité de commande et portés par un râtelier de support fixe en étant placés sur les lieux géométriques possibles de déplacement des taquets.

7. Appareil selon la revendication 1, caractérisé en ce que le moyen de transfert (4) comprend:

- une pince de préhension (80),
- un bras (52) de support de la pince,
- un ensemble (53) de motorisation du bras dont le fonctionnement est placé sous le contrôle de l'unité de commande et apte à mouvoir ledit bras:

. en déplacement angulaire horizontal alternatif entre deux positions extrêmes correspondant à l'aplomb du poste fixe de présentation et de l'ouverture de la cavité du four,

. en déplacement rectiligne vertical alternatif dans chacune des positions extrêmes,

- et des détecteurs des différentes positions du bras raccordés à l'unité de commande.

8. Appareil selon la revendication 7, caractérisé en ce que l'ensemble de motorisation (53) comprend:

- un arbre (54) de direction verticale portant le bras (52) de la pince (80),
- un organe moteur (58) sollicitant l'arbre en déplacement rectiligne axial alternatif,
- et un organe moteur (59) sollicitant l'arbre en rotation angulaire partielle alternative sur son axe.

9. Appareil selon la revendication 7, caractérisé en ce que la pince (80) comporte deux mâchoires (82) sollicitées en fermeture par un organe élastique (83) et délimitant en position de fermeture, d'une part, une section ouverte (84) capable d'enserrer le col d'un récipient et, d'autre part, par leurs extrémités, un couloir à bords convergents pour l'engagement d'un col de matras.

10. Appareil selon la revendication 7 ou 9, caractérisé en ce que les mâchoires (82) de la pince délimitent en position fermée une section ouverte complémentaire à un embout (16) de préhension et de suspension équipant le col (14) de chaque récipient (12).

11. Appareil selon la revendication 10, caractérisé en ce que l'embout de préhension (16) et de suspension comprend:

- deux demi-coquilles (86) semi cylindriques destinées à entourer le col d'un récipient et à coopérer en butée axiale avec le rebord extrême (14a) dudit col,
- une bague (88) entourant les demi-coquilles, coopérant en butée axiale avec ces dernières et présentant dans sa périphérie extérieure une gorge annulaire (89) pour l'engagement des mâchoires (82) de la pince.

12. Appareil selon la revendication 7 ou 9, caractérisé en ce que la pince (80) comporte un corps (81) formant un étrier (92) sur lequel est articulé un couvercle (90) basculant associé à un détecteur de positions (94) relié à l'unité de commande (5), le couvercle comportant une tubulure (95) raccordée à un groupe de pompage et d'aspiration.

13. Appareil selon la revendication 1, caractérisé en ce que la cheminée (15) du four (1) est bordée par une enveloppe (17) concentrique avec laquelle est délimitée une capacité annulaire (18) placée en relation avec un circuit (19) de circulation d'un fluide de régulation de la température imposée au col d'un récipient par l'échauffement du produit soumis au rayonnement micro-ondes.

14. Appareil selon la revendication 1 ou 13, caractérisé en ce que le four comporte une cavité (7) comportant une chambre piège à eau (10) placée en relation avec la capacité annulaire (18) entourant la cheminée.

15. Appareil selon la revendication 1, caractérisé en ce que l'unité de commande (5) comprend:

- des moyens (97) de visualisation des résultats de lecture des moyens de prise en compte,
- et un tableau (98) de commande manuelle pour l'affichage de ces résultats en tant que paramètres de fonctionnement du four.

**Patentansprüche**

1. Mineralisierungsapparat zur automatischen Einzelbehandlung einer in einem Behälter angeordneten Produktprobe, des Typs umfassend einen Ofen zur Aufnahme eines Behälters und ein Mittel zur Einzelbeförderung eines Behälters in den bzw. aus dem Ofen, dadurch gekennzeichnet, daß:
- der Ofen (1) des Mikrowellentyps ist und einen Hohlraum (7) zur Aufnahme einzig und allein des Stauraums (13) eines Behälters (12) begrenzt, welcher in den bzw. aus dem Hohlraum über eine permanent offene Öffnung (11) des Hohlraums, die Teil des Hohlraums und von einem den Hals des Behälters zu umgebenden Schacht (15) begrenzt ist, ein- bzw. ausbringbar ist,
- eine Einrichtung (2) zum Zuführen von in Einzelaufnahmen plazierten Behältern in Zufallsfolge und zur Einzelpräsentation an einer ortsfesten Station (24),
- Mittel (3) zum Aufnehmen mindestens eines für jede zugeführte und an der ortsfesten Station mit einem Behälter präsentierte Produktprobe typischen Behandlungsmerkmals,
- das Einzeltransportmittel (4) zum Transportieren eines an der ortsfesten Station präsentierten Behälters zwischen der Einrichtung (2) und dem Ofen (1) und umgekehrt vorgesehen ist,
- eine Steuereinheit (5) zum Auslösen der automatischen Funktion des Apparats entsprechend einem eigenen Zyklus für jede Probe aufgrund der von den mit ihr verbundenen Aufnahmemitteln entsendeten Informationen vorgesehen ist.

2. Apparat nach Anspruch 1, dadurch gekennzeichnet, daß die Zuführ- und Präsentationseinrichtung (2) an ein Antriebsmotororgan (23) des Schritttyps oder eines anderen Typs angeschlossen ist, dessen Funktion der Kontrolle der Steuereinheit (5), eines Detektors (35) für die Anwesenheit von zugeführten Behältern an der ortsfesten Station (24) und eines Detektors (25) zur Indexierung der Einrichtung an der ortfesten Station unterliegt.

3. Apparat nach Anspruch 2, dadurch gekennzeichnet, daß die Zuführ- und Präsentationseinrichtung (2) durch einen Endlosförderer gebildet ist, der vor einer Beladestation und einer Entladestation, die oberhalb bzw. unterhalb der Transportstation angeordnet sind, vorbeiläuft.

4. Apparat nach Anspruch 2, dadurch gekennzeichnet, daß die Zuführ- und Präsentationseinrichtung (2) durch einen Kreisförderer oder einen Drehzylinder, der abnehmbare Körbe (28) zur Halterung von Behältern umfaßt, gebildet ist.

5. Apparat nach Anspruch 1, dadurch gekennzeichnet, daß die Mittel (3) zum Aufnehmen mindestens eines Behandlungsmerkmals jeder Probe folgendes umfassen:
- eine am Hals jedes Behälters vorgesehene Markierfläche (50),
- auf der Fläche aufgetragene und auslöschbare kodierte Informationen,
- ein Ablesemittel (51) für die kodierten Informationen.

6. Apparat nach Anspruch 1, dadurch gekennzeichnet, daß die Mittel (3) zum Aufnehmen mindestens eines Behandlungsmerkmals jeder Probe folgendes umfassen:
- bewegliche Mitnehmer (39), die in ihrer Position verstellbar und vom Gerüst der Zuführ- und Präsentationseinrichtung passend für jede Aufnahme (27) zur Halterung eines Behälters getragen sind,
- Kontakte (46), die mit der Steuereinheit verbunden und von einem ortsfesten Trägergestell getragen sind, wobei sie an den möglichen geometrischen Verschiebestellen der Mitnehmer angeordnet sind.

7. Apparat nach Anspruch 1, dadurch gekennzeichnet, daß das Transportmittel (4) folgendes umfaßt:
- eine Greifzange (80),
- einen Tragarm (52) für die Zange,
- eine Motorgruppe (53) für den Arm, deren Funktion der Kontrolle der Steuereinheit unterliegt und der Bewegung des Armes dient:
. entsprechend einer horizontalen Winkelverschiebung abwechselnd zwischen zwei Endpositionen, nämlich senkrecht zur ortsfesten Präsentationsstation und zur Öffnung des Hohlraums des Ofens,
. entsprechend einer vertikalen geradlinigen Verschiebung abwechselnd in jede der Endpositionen,
- und mit der Steuereinheit verbundene Detektoren für die verschiedenen Positionen des Armes.

8. Apparat nach Anspruch 7, dadurch gekennzeichnet, daß die Motorgruppe (53) folgendes umfaßt:
- eine Welle (54) in vertikaler Richtung, die den Arm (52) der Zange (80) trägt,
- ein Motororgan (58), das die Welle in abwechselnde axiale geradlinige Bewegung versetzt,
- und ein Motororgan (59), das die Welle in abwechselnde partielle Winkelrotation um ihre Achse versetzt.

9. Apparat nach Anspruch 7, dadurch gekennzeichnet, daß die Zange (80) zwei Backen (82) umfaßt, die durch ein elastisches Organ (83) in Schließstellung gedrückt sind und in Schließstellung einerseits einen offenen Abschnitt (84) zum Einspannen eines Behälterhalses und anderseits mit ihren Enden einen Gang mit konvergierenden Rändern zum Einschieben eines Kolbenhalses begrenzen.

10. Apparat nach Anspruch 7 oder 9, dadurch gekennzeichnet, daß die Backen (82) der Zange in Schließstellung einen offenen Abschnitt begrenzen, der komplementär ist zu einem Greif- und Hängeansatz (16), mit dem der Hals (14) jedes Behälters (12) ausgestattet ist.

11. Apparat nach Anspruch 10, dadurch gekennzeichnet, daß der Greif- und Hängeansatz (16) folgendes umfaßt:

- zwei halbzylindrische Halbschalen (86) zum Umgeben des Halses eines Behälters und zum Zusammenwirken mit dem Endrand (14a) des Halses als Axialanschlag,

- einen die Halbschalen umgebenden Ring (88), der als Axialanschlag mit ersteren zusammenwirkt und an seinem Außenumfang eine ringförmige Auskehlung (89) zum Eingreifen der Backen (82) der Zange aufweist.

12. Apparat nach Anspruch 7 oder 9, dadurch gekennzeichnet, daß die Zange (80) einen Körper (81) umfaßt, der einen Bügel (92) bildet, an welchem ein Schwenkdeckel (90) angelenkt ist, der mit einem an die Steuereinheit (5) angeschlossenen Positionsdetektor (94) verbunden ist, wobei der Deckel ein Röhrchen (95) umfaßt, das an eine Pump- und Ansauggruppe angeschlossen ist.

13. Apparat nach Anspruch 1, dadurch gekennzeichnet, daß der Schacht (15) des Ofens (1) von einer konzentrischen Hülle (17) umschlossen ist, mit welcher ein ringförmiger Raum (18) begrenzt ist, der mit einem Kreislauf (19) für Fluid zur Regulierung der auf den Hals eines Behälters durch Erhitzen des der Mikrowellenstrahlung ausgesetzten Produkts aufgebrachten Temperatur in Verbindung steht.

14. Apparat nach Anspruch 1 oder 13, dadurch gekennzeichnet, daß der Ofen einen Hohlraum (7) umfaßt, der eine Wasserfangkammer (10) enthält, die mit dem den Schacht umgebenden ringförmigen Raum (18) in Verbindung steht.

15. Apparat nach Anspruch 1, dadurch gekennzeichnet, daß die Steuereinheit (5) folgendes umfaßt:

- Mittel (97) zum Sichtbarmachen der Ableseergebnisse der Aufnahmemittel,

- und eine manuelle Steuertafel (98) zur Anzeige dieser Resultate als Funktionsparameter des Ofens.

**Claims**

1. Mineralization apparatus for the individual automatic treatment of a sample of product placed in a container, of the type comprising an oven for receiving a container and means for individual transfer of a container into and out of an oven, characterized in that:

- the oven (1) is of micro-wave type defining a cavity (7) capable only of receiving the retention portion (13) of a container (12) adapted to be placed in and removed from the cavity via a permanently open opening (11) provided in the cavity and bordered by a stack (15) designed to surround the neck of the container,

- a device (2) is provided for bringing in random succession and for the individual presentation at fixed stations, (24) of containers placed inside individual housings,

- means (3) are provided for taking into account at least one characteristic of treatment specific to each sample of product brought and presented to a fixed station by a container,

- the means (4) for individual transfer is arranged so as to transfer a container between the device (2) and the oven (1) and vice-versa of a container presented at a fixed station,

- a control unit (5) is provided for triggering the automatic operation of the apparatus according to a cycle specific to each sample from information issued from the means for taking into account to which it is connected.

2. Apparatus according to claim 1, characterized in that the conducting and presenting device (2) is associated with a drive motor member (23), of step-by-step or other type, of which the operation is controlled by the control unit (5), a detector (35) detecting the presence of containers conducted to the fixed station (24) and a detector (25) of indexing of the stationary device.

3. Apparatus according to claim 2, characterized in that the conducting and presenting device (2) is constituted by an endless conveyor advancing in front of a loading station and an unloading station located respectively upstream and downstream of the transfer station.

4. Apparatus according to claim 2, characterized in that the conducting and presenting device (2) is constituted by a carrousel or rotating barrel comprising removable baskets (28) for supporting containers.

5. Apparatus according to claim 1, characterized in that the means (3) for taking into account at least one characteristic of treatment of each sample comprise:

- a marking surface (50) presented by the neck of each recipient,

- deletable coded information added on the surface,

- a means for reading (51) the coded information.

6. Apparatus according to claim 1, characterized in that the means (3) for taking into account at least one characteristic of treatment of each sample comprise:

- mobile catches (39) which are adjustable in position and borne by the structure of the conducting and presenting device specifically for each housing (27) supporting a container,

- contactors (46) connected to the control unit and borne by a fixed supporting rack, being placed on the possible geometrical loci of displacement of the catches.

7. Apparatus according to claim 1,

characterized in that the transfer means (4) comprises:
- a gripping member (80),
- an arm (52) for supporting the gripping member,
- an assembly (53) for motorization of the arm of which the operation is controlled by the control unit and adapted to move said arm:
  . in reciprocating horizontal angular displacement between two extreme positions corresponding to being plumb with the fixed station of presentation and with the opening of the cavity of the oven,
  . in reciprocating vertical rectilinear displacement in each of the end positions,
- and detectors detecting the different positions of the arm, connected to the control unit.

8. Apparatus according to claim 7, characterized in that the motorization assembly (53) comprises:
- a vertical shaft (54) bearing the arm (52) of the gripper member (80),
- a drive member (58) urging the shaft in reciprocating axial rectilinear displacement,
- and a drive member (59) urging the shaft in reciprocating partial angular rotation on its axis.

9. Apparatus according to claim 7, characterized in that the gripper member (80) comprises two jaws (82) urged towards closure by an elastic member (83) and defining in closed position on the one hand an open section (84) capable of tightening around the neck of a container and, on the other hand, by their ends, a passage with convergent edges for engagement of a flask neck.

10. Apparatus according to claim 7 or 9, characterized in that the jaws (82) of the gripper member define in closed position an open section complementary of an end piece (16) for gripping and for suspension with which the neck (14) of each recipient is fitted.

11. Apparatus according to claim 10, characterized in that the gripping and suspension end piece (16) comprises:
- two semi-cylindrical half-shells (86) adapted to surround the neck of a container and to cooperate in axial abutment with the end edge (149) of said neck,
- a ring (88) surrounding the half-shells, cooperating in axial abutment with the latter and presenting in its outer periphery an annular groove (89) for the engagement of the jaws (82) of the gripper member.

12. Apparatus according to claim 7 or 9, characterized in that the gripper member (80) comprises a body (81) forming a stirrup (92) on which is articulated a rocking cover (90) associated with a position detector (94) connected to the control unit (5), the cover comprising a tube (95) connected to a pumping and suction unit.

13. Apparatus according to claim 1, characterized in that the stack (15) of the oven (1) is bordered by a concentric envelope (17) with which is defined an annular volume (18) placed in relation with a circuit (19) for the circulation of a fluid regulating the temperature imposed on the neck of a recipient by heating the product subjected to the micro-wave radiation.

14. Apparatus according to claim 1 or 13, characterized in that the oven comprises a cavity (7) comprising a water-trap chamber (10) placed in relation with the annular volume (18) surrounding the stack.

15. Apparatus according to claim 1, characterized in that the control unit (5) comprises:
- means (97) for displaying the results of reading of the means taking characteristics into account,
- and a manual control panel (98) for displaying these results as operational parameters of the oven.

Fig-2

1

Fig. 2

Fig. 3

Fig. 8

Fig. 4

0 156 742

Fig-5

Fig-6

Fig-7

Fig. 9

Fig. 11

Fig. 10

*Fig.12*

*Fig.13*

Fig. 14

Fig. 15